# EUROPÄISCHE PATENTSCHRIFT

(11) **EP 3 337 688 B1**
(45) Veröffentlichungstag und Bekanntmachung des Hinweises auf die Patenterteilung: **13.10.2021**
(21) Anmeldenummer: 16751595.6
(22) Anmeldetag: 16.08.2016
(51) Int. Cl.: B60N 2/28

(54) **KINDERSITZSYSTEM**
CHILD CAR SEAT SYSTEM
SYSTÈME DE SIÈGE DE SÉCURITÉ POUR ENFANT

(30) Priorität: 20.08.2015 DE 102015113852
(43) Veröffentlichungstag der Anmeldung: 27.06.2018
(73) Patentinhaber: RECARO Child Safety GmbH & Co. KG, 95352 Marktleugast (DE)
(72) Erfinder: GEBHARDT, Stefan, 95466 Weidenberg (DE); RUFF, Thomas, 95326 Kulmbach (DE)
(74) Vertreter: Perani & Partners S.p.A.
(86) Internationale Anmeldenummer: PCT/EP2016/069384
(87) Internationale Veröffentlichungsnummer: WO 2017/029273

(56) Entgegenhaltungen:
- DE-A1- 19 805 331
- ES-U- 1 103 231
- US-A- 4 750 783
- US-B1- 6 193 312
- US-B1- 7 909 400

## Beschreibung

### Stand der Technik

Die Erfindung betrifft ein Kindersitzsystem nach dem Oberbegriff des Patentanspruchs 1. Es ist bereits ein Kindersitzsystem mit zumindest einem Kindersitz (z.B. US-A-4750783), der für ein zumindest im Wesentlichen aufrecht sitzendes Kind vorgesehen ist, und mit einer Kinderschale, die für ein liegendes Kleinkind vorgesehen ist, wobei die Kinderschale dazu vorgesehen ist, in dem Kindersitz aufgenommen zu werden, vorgeschlagen worden .

Die Aufgabe der Erfindung besteht insbesondere darin, ein gattungsgemäßes System mit verbesserten Eigenschaften hinsichtlich einer Sicherheit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Kindersitzsystem mit zumindest einem Kindersitz, der für ein zumindest im Wesentlichen aufrecht sitzendes Kind vorgesehen ist, und mit einer Kinderschale, die für ein liegendes Kleinkind vorgesehen ist, wobei die Kinderschale dazu vorgesehen ist, in dem Kindersitz aufgenommen zu werden.

Es wird vorgeschlagen, dass die Kinderschale zumindest im Wesentlichen von einer Hartschale gebildet ist. Unter einem "Kindersitz" soll dabei insbesondere ein Sitz für ein Kind verstanden werden, in dem ein Kind in einem Kraftfahrzeug sicher und kindgerecht befördert werden kann, wobei der Kindersitz dabei insbesondere für ein Kind von der Geburt bis zum Alter von ca. vier Jahren und/oder einem Gewicht von bis zu ca. 20 kg vorgesehen ist. Unter "für ein im Wesentlichen aufrecht sitzendes Kind vorgesehen", soll dabei insbesondere verstanden werden, dass ein Kind, das in dem Kindersitz befördert wird, in einer vorschriftsmäßigen Haltung im Wesentlichen aufrecht in dem Kindersitz sitzt, wobei es ebenso denkbar ist, dass der Kindersitz leicht geneigt ist und das Kind so nicht komplett aufrecht sitzt, sondern in einer leichten Liegestellung in dem Kindersitz sitzt. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Kinderschale" soll dabei insbesondere eine Transportschale für ein Kleinkind verstanden werden, in der ein Kleinkind von der Geburt bis zum Alter von 12 Monaten und/oder mit einem Gewicht von bis zu 10 kg, insbesondere in einem Kraftfahrzeug, sicher und kleinkindgerecht befördert werden kann, wobei das in der Kinderschale transportierte Kleinkind im Wesentlichen liegend in der Kinderschale transportiert wird. Grundsätzlich ist es ebenfalls denkbar, dass die Kinderschale zum Transport eines Kleinkinds außerhalb eines Kraftfahrzeugs vorgesehen ist; so ist es beispielsweise denkbar, dass die Kinderschale über ein Koppelmodul mit einem Kinderwagengrundgestell verbindbar ist, um so zusammen mit diesem einen Kinderwagen auszubilden. Unter "in dem Kindersitz aufgenommen" soll dabei insbesondere in dem Sitzbereich des Kindersitzes angeordnet und zumindest teilweise, insbesondere in den beiden Seitenbereichen und dem hinteren Bereich des Kindersitzes, von dem Kindersitz umgeben verstanden werden. Insbesondere ist die Kinderschale so in dem Sitzbereich des Kindersitzes angeordnet, dass die Kinderschale seitlich zumindest großteils von dem Kindersitz umgeben ist. Unter "im Wesentlichen von einer Hartschale gebildet" soll dabei insbesondere verstanden werden, dass die Kinderschale zumindest zu 50%, vorzugsweise zumindest zu 75% aus einer Hartschale, also einem harten Kunststoff, oder einem anderen, dem Fachmann als sinnvoll erscheinenden Material gebildet ist. Die Hartschale bildet dabei einen tragenden Grundkörper der Kinderschale aus. Die Kinderschale weist weiter ein Polster auf, das einen Liegebereich, in dem das Kleinkind angeordnet ist, auspolstert. Grundsätzlich ist es auch denkbar, dass die Kinderschale Verstärkungselemente aufweist, die die Kinderschale verstärken und dazu mit dieser verbunden oder in diese eingebracht sind. Darunter, dass die "Kinderschale im Wesentlichen von einer Hartschale gebildet ist", soll dabei insbesondere verstanden werden, dass die Kinderschale nicht nur von einem Polster oder mehreren Polstern gebildet ist. Durch eine erfindungsgemäße Ausgestaltung kann vorteilhaft ein Kindersitzsystem bereitgestellt werden, das einen besonders vorteilhaften Schutz für ein in einer Kinderschale transportiertes Kleinkind bildet.

Weiter wird vorgeschlagen, dass die Kinderschale ein integriertes Gurtsystem aufweist, das für eine Fahrtsicherung des Kleinkinds vorgesehen ist. Unter einem "integrierten Gurtsystem" soll dabei insbesondere ein für ein Kleinkind vorgesehenes, fest mit der Kinderschale verbundenes Gurtsystem verstanden werden, das insbesondere zur Sicherung von Kleinkindern vorgesehen ist. Dabei handelt es sich bei dem integrierten Gurtsystem vorzugsweise um ein 5-Punkt-Gurtsystem, das mehrere miteinander verbundene Gurte umfasst, die über ein gemeinsames Gurtschloss zum Sichern des Kleinkinds miteinander verbunden werden können. Dabei ist das interne Gurtsystem insbesondere unterschiedlich von einem externen, fahrzeugseitigen Gurtsystem, welches fest in dem Fahrzeug integriert ist, und einem Gurtsystem des Kindersitzes ausgebildet. Unter einer "Fahrtsicherung" soll dabei insbesondere eine Sicherung des Kleinkinds in der Kinderschale während einer Fahrt verstanden werden. Das integrierte Gurtsystem ist aber grundsätzlich auch dazu vorgesehen, das Kleinkind auch außerhalb eines Fahrzeugs in der Kinderschale zu sichern. Dadurch kann die Kinderschale besonders vorteilhaft zur Sicherung des Kleinkinds ausgebildet werden und das Kleinkind kann insbesondere schon außerhalb des Kraftfahrzeugs in der Kinderschale gesichert werden, wodurch eine besonders vorteilhafte Verwendung des Kindersitzes erreicht werden kann.

Ferner wird vorgeschlagen, dass die Kinderschale wenigstens ein Formschlusselement aufweist, das dazu vorgesehen ist, die Kinderschale mit einem korrespondierenden Formschlusselement des Kindersitzes zumindest in Sitzrichtung zu sichern. Unter einem "Formschlusselement" soll dabei insbesondere ein Element verstanden werden, das mittels eines geometrischen Eingriffs mit einem korrespondierenden Formschlusselement und/oder einer Auflage auf einem korrespondierenden Formschlusselement eine formschlüssige Verbindung eingehen kann. Grundsätzlich ist es auch denkbar, dass die Kinderschale über wenigstens ein Form- und/oder Kraftschlusselement mit dem Kindersitz verbindbar ist, wobei das Form- und/oder Kraftschlusselement über eine Mischung aus einem Form- und einem Kraftschluss für eine feste Verbindung zwischen dem Kindersitz und der Kinderschale sorgt. Dadurch kann die Kinderschale besonders einfach und vorteilhaft mit dem Kindersitz gekoppelt werden.

Weiter wird vorgeschlagen, dass das wenigstens eine Formschlusselement auf einer Rückseite der Kinderschale angeordnet ist. Unter einer "Rückseite der Kinderschale" soll dabei insbesondere eine der Sitz- bzw. Liegefläche, die die Kinderschale ausbildet, gegenüberliegende Seite der Kinderschale verstanden werden. Die Rückseite der Kinderschale ist dabei von der in einer Sitz- bzw. Liegerichtung der Kinderschale hinteren Seite der Kinderschale gebildet. In einem in dem Kindersitz aufgenommenen Zustand ist die Rückseite der Kinderschale dem Kindersitz zugewandt. Dadurch können die Formschlusselemente besonders vorteilhaft zur Kopplung mit dem Kindersitz angeordnet werden.

Des Weiteren wird vorgeschlagen, dass das wenigstens eine Formschlusselement der Kinderschale dazu vorgesehen ist, zur starren Anbindung der Kinderschale an den Kindersitz wenigstens einen Bolzen des Formschlusselements des Kindersitzes zumindest teilweise zu umgreifen. Unter "zumindest teilweise umgreifen" soll dabei insbesondere verstanden werden, dass das Formschlusselement den Bolzen zumindest in einem gekoppelten Zustand zu zumindest 50%, vorzugsweise zu mehr als 75% und in einem besonders vorteilhaften Zustand in einer Richtung vollständig umschließt. Dadurch kann eine besonders vorteilhafte formschlüssige Verbindung zwischen der Kinderschale und dem Kindersitz bereitgestellt werden.

Zudem wird vorgeschlagen, dass das wenigstens eine Formschlusselement als ein ISO-Fix-Konnektor ausgebildet ist. Unter einem "ISO-Fix-Konnektor" soll dabei insbesondere ein nach der Norm ISO 13216 standardisierter Konnektor verstanden werden, der zur Verbindung von Kindersitzsystemen mit einer Karosserie eines Kraftfahrzeugs vorgesehen ist. Dadurch kann das wenigstens eine Formschlusselement besonders einfach von einem Normteil ausgebildet werden.

Weiterhin wird vorgeschlagen, dass die Kinderschale zumindest zwei Formschlusselemente zur Anbindung der Kinderschale an den Kindersitz aufweist. Dadurch kann die Kinderschale besonders sicher mit dem Kindersitz gekoppelt werden.

Außerdem wird vorgeschlagen, dass der Kindersitz wenigstens eine Sitzgrundstruktur und wenigstens eine innerhalb der Sitzgrundstruktur angeordnete Zwischenschale aufweist. Unter einer "Sitzgrundstruktur" soll dabei insbesondere eine tragende Struktur des Kindersitzes verstanden werden, die den Kindersitz zumindest nach hinten und zur Seite hin begrenzt. Unter einer "Zwischenschale" soll dabei insbesondere ein zu der Sitzgrundstruktur zusätzliches Strukturelement verstanden werden, das auf einer Innenseite der Sitzgrundstruktur angeordnet ist und insbesondere in den Seitenbereichen des Kindersitzes eine zusätzliche Verstärkung ausbildet. Die Zwischenschale ist dabei zwischen der Sitzgrundstruktur und einem Polster des Kindersitzes und/oder der Kinderschale angeordnet. Dadurch kann eine Sicherheit des Kindersitzes besonders vorteilhaft erhöht werden, da die Zwischenschale einen zusätzlichen Aufprallschutz bietet.

Es wird weiter vorgeschlagen, dass die Kinderschale wenigstens ein weiteres Formschlusselement aufweist, das an einer Unterseite der Kinderschale angeordnet ist. Unter einem "weiteren Formschlusselement" soll dabei insbesondere ein von dem wenigstens einen Formschlusselement unterschiedliches Formschlusselement verstanden werden. Unter einer "Unterseite der Kinderschale" soll dabei insbesondere eine Seite der Kinderschale verstanden werden, auf der die Kinderschale vorschriftsgemäß aufgestellt werden kann. Die Unterseite der Kinderschale ist in einem Zustand, in dem die Kinderschale in dem Kindersitz angeordnet ist, einer Sitzfläche des Kindersitzes zugewandt. Dadurch kann die Kinderschale besonders vorteilhaft gegen eine Rotation in dem Kindersitz gesichert werden.

Zudem wird vorgeschlagen, dass das wenigstens eine weitere Formschlusselement an einem vorderen Ende der Kinderschale angeordnet ist. Unter einem "vorderen Ende der Kinderschale" soll dabei insbesondere ein in Sitz- bzw. Liegerichtung der Kinderschale vorderes Ende verstanden werden. Dadurch kann das weitere Formschlusselement besonders vorteilhaft zur Sicherung der Kinderschale an dem Kindersitz angeordnet werden.

Weiter wird vorgeschlagen, dass das wenigstens eine weitere Formschlusselement als ein im Wesentlichen L-förmiger Haken ausgebildet ist. Unter einem "im Wesentlichen L-förmigen Haken" soll dabei insbesondere verstanden werden, dass das Formschlusselement im Wesentlichen eine L-Form ausbildet, wobei zumindest zwei Teilbereiche des Formschlusselements orthogonal aufeinander stehen. Grundsätzlich ist es auch denkbar, dass die zumindest zwei Teilbereiche in einem Winkel zueinander stehen, der um maximal 30 Grad, vorzugsweise um maximal 15 Grad und vorzugsweise um maximal 5 Grad von 90 Grad abweicht. Dadurch kann das Formschlusselement besonders einfach ausgebildet werden.

Ferner wird vorgeschlagen, dass der Kindersitz wenigstens ein zu dem wenigstens einen weiteren Formschlusselement der Kinderschale korrespondierend ausgebildetes weiteres Formschlusselement aufweist. Unter einem "korrespondierend ausgebildeten Formschlusselement" soll dabei insbesondere ein Formschlusselement verstanden werden, das so ausgebildet ist, dass es mit dem Formschlusselement, zu dem es korrespondierend ausgebildet ist, einen Formschluss eingehen kann, um so zumindest in einer Richtung fest miteinander verbunden zu sein. Das korrespondierend ausgebildete Formschlusselement ist dabei vorzugsweise als eine Ausnehmung ausgebildet, in die das weitere Formschlusselement der Kinderschale zur Ausbildung einer formschlüssigen Verbindung eingreift. Dadurch kann der Kindersitz vorteilhaft zur Kopplung mit der Kinderschale ausgebildet werden.

Es wird weiterhin vorgeschlagen, dass das wenigstens eine weitere Formschlusselement des Kindersitzes als eine Ausnehmung ausgebildet ist. Dadurch kann das weitere Formschlusselement des Kindersitzes besonders vorteilhaft ausgebildet werden.

Das erfindungsgemäße Kindersitzsystem soll hierbei nicht auf die oben beschriebene Anwendung und Ausführungsform beschränkt sein. Insbesondere kann das erfindungsgemäße Kindersitzsystem zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines erfindungsgemäßen Kindersitzsystems mit einer Sitzbasis, einem Kindersitz und einer Sitzschale,
- Fig. 2: eine schematische Darstellung des Kindersitzes und der Sitzbasis,
- Fig. 3: eine schematische Detailansicht von Formschlusselementen des Kindersitzes zur Anbindung der Kinderschale,
- Fig. 4: eine schematische Seitenansicht der Kinderschale,
- Fig. 5: eine schematische Rückansicht der Kinderschale,
- Fig. 6: eine schematische Detailansicht eines weiteren Formschlusselements der Kinderschale an einem vorderen Ende und
- Fig. 7: eine schematische Detailansicht eines weiteren Formschlusselements des Kindersitzes.

### Beschreibung des Ausführungsbeispiels

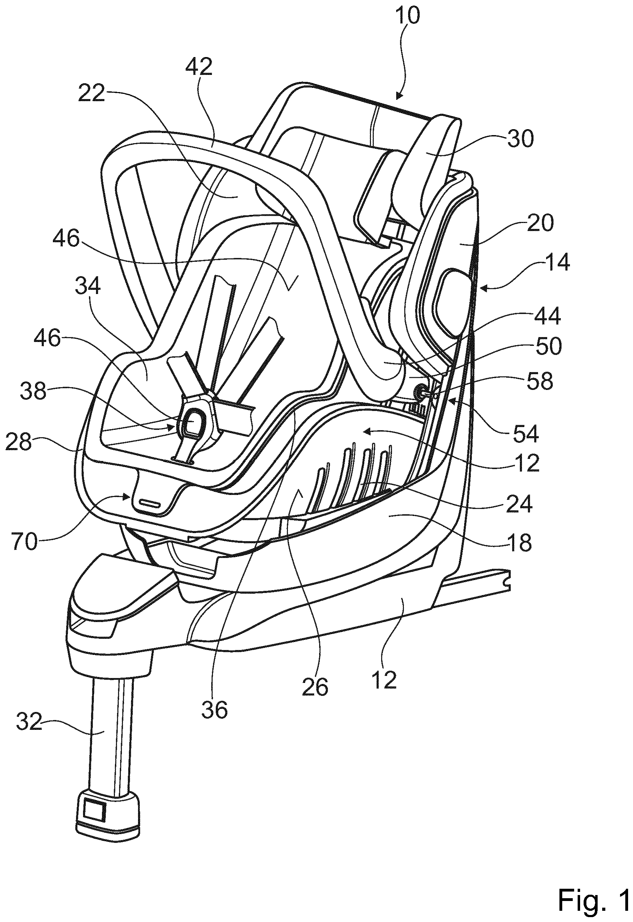

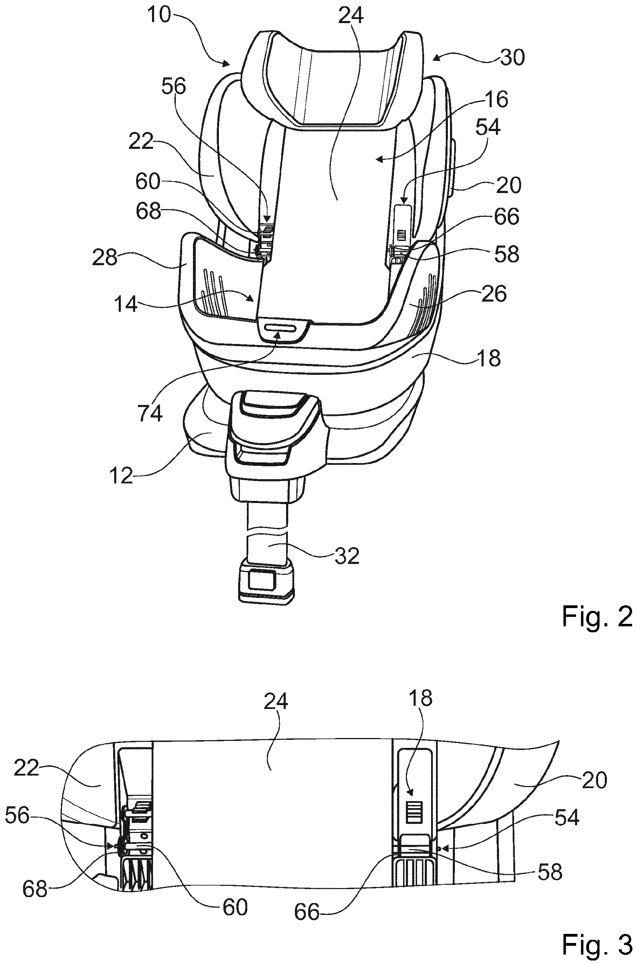

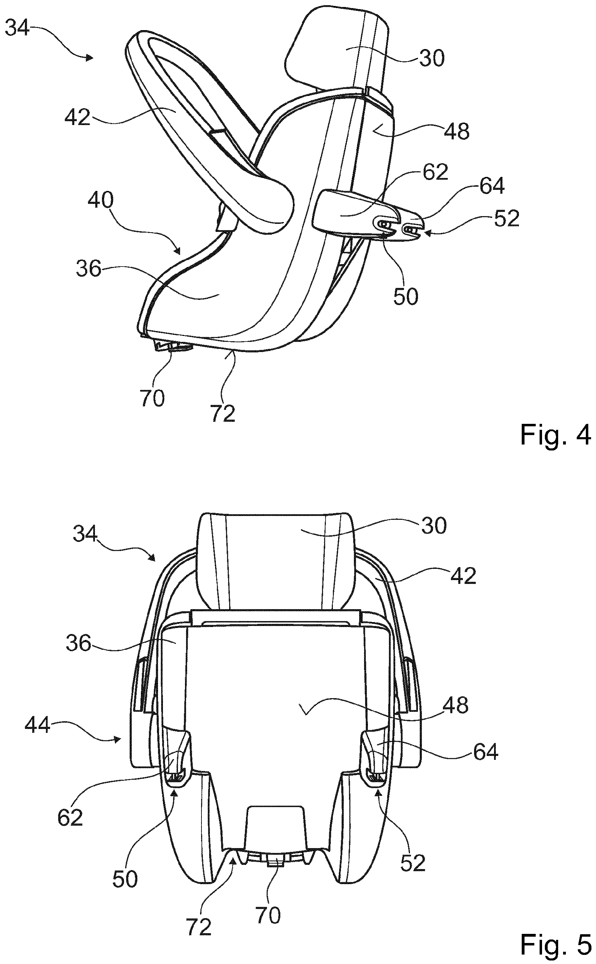

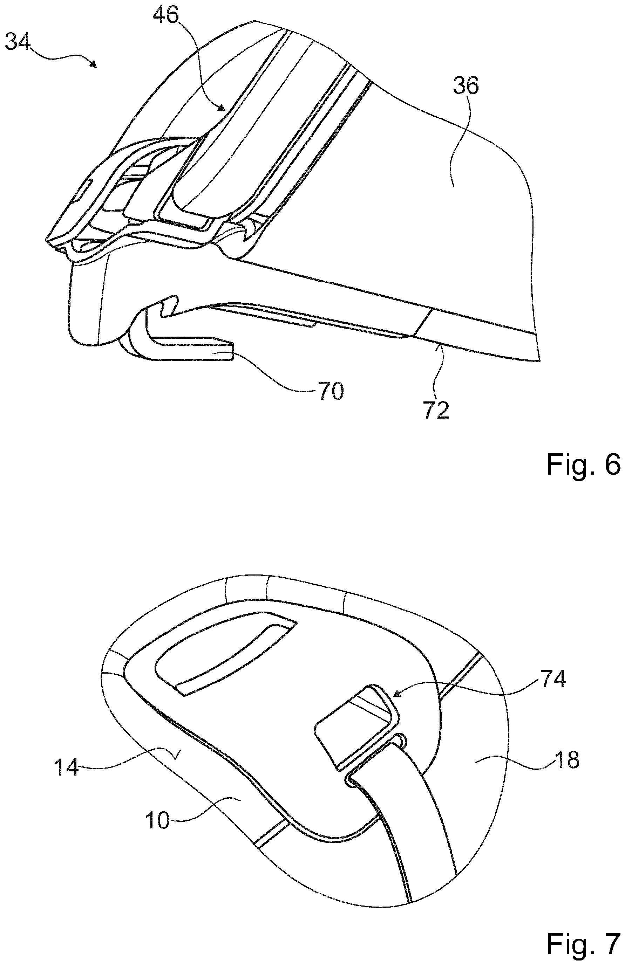

Die Figuren 1 bis 7 zeigen eine Ausgestaltung eines erfindungsgemäßen Kindersitzsystems. Das Kindersitzsystem ist als ein Kraftfahrzeugkindersitzsystem ausgebildet, das dazu vorgesehen ist, in einem Kraftfahrzeug angebracht zu werden. Das Kindersitzsystem ist zur sicheren Beförderung eines Kinds oder eines Babys in dem Kraftfahrzeug vorgesehen. Das Kindersitzsystem umfasst einen Kindersitz 10. Der Kindersitz 10 ist zum Transport von Kindern von der Geburt bis zum Alter von ca. vier Jahren und einem Gewicht von bis zu ca. 20 kg vorgesehen. Der Kindersitz 10 ist dabei für ein im Wesentlichen aufrecht sitzendes Kind vorgesehen. Der Kindersitz 10 ist in einem in dem Kraftfahrzeug montierten Zustand fest auf einem Kraftfahrzeugsitz oder einer Kraftfahrzeugsitzbank aufgeständert. Zur Anbindung des Kindersitzes 10 in dem Kraftfahrzeug weist das Kindersitzsystem eine Sitzbasis 12 auf. Die Sitzbasis 12 ist dazu vorgesehen, direkt mit dem Kraftfahrzeugsitz oder der Kraftfahrzeugsitzbank des Kraftfahrzeugs verbunden zu werden. Die Sitzbasis 12 weist dabei an ihrem hinteren Ende Befestigungsmittel auf, die zur direkten Kopplung mit dem Kraftfahrzeug vorgesehen sind. Die Befestigungsmittel sind dabei als ISO-Fix-Konnektoren ausgebildet. Zur Anbindung sind in dem Kraftfahrzeug korrespondierend ausgebildete ISO-Fix-Konnektoren als Befestigungsmittel angeordnet, über die die Sitzbasis 12 fest mit dem Kraftfahrzeug verbindbar ist. Grundsätzlich ist es auch denkbar, dass die Sitzbasis 12 über auf eine andere, dem Fachmann als sinnvoll erscheinende Weise ausgebildete Befestigungsmittel mit dem Kraftfahrzeug koppelbar ist. Die Sitzbasis 12 weist zudem an ihrem vorderen Ende einen Standfuß 32 auf, mit dem die Sitzbasis 12 auf einem Boden des Kraftfahrzeugs abgestützt werden kann. Grundsätzlich ist es ebenfalls denkbar, dass das Kindersitzsystem keine Sitzbasis 12 aufweist und der Kindersitz 10 direkt über entsprechend ausgebildete Befestigungsmittel in dem Kraftfahrzeug angebunden wird.

Der Kindersitz 10 bildet einen Sitzboden 14 und eine Rückenlehne 16 aus. Der Sitzboden 14 bildet dabei eine Sitzfläche aus, auf die ein in dem Kindersitz 10 angeordnetes Kind gesetzt werden kann. Die Rückenlehne 16 ist an einer Rückseite des Sitzbodens 14 angeordnet und erstreckt sich von dem Sitzboden 14 aus nach oben von der Sitzbasis 12 weg. Der Kindersitz 10 weist eine Sitzgrundstruktur 18 auf. Die Sitzgrundstruktur 18 ist als eine Schale des Kindersitzes 10 ausgebildet. Die Sitzgrundstruktur 18 bildet eine tragende Struktur des Kindersitzes 10 aus. Die Sitzgrundstruktur 18 ist aus einem Hartplastik gebildet. Grundsätzlich ist es auch denkbar, dass die Sitzgrundstruktur 18 aus einem anderen, dem Fachmann als sinnvoll erscheinenden Material gebildet ist, wie beispielsweise aus einem Faserverbundwerkstoff, wie insbesondere einem CFK oder einem GFK. Über die Sitzgrundstruktur 18 ist der Kindersitz 10 mit der Sitzbasis 12 koppelbar. In einem unteren Bereich bildet die Sitzgrundstruktur 18 einen Anbindungsbereich für die Sitzbasis 12 aus. Die Sitzgrundstruktur 18 bildet weiter eine Rückseite der Rückenlehne 16, sowie in einem von der Sitzbasis 12 im montierten Zustand abgewandten oberen Bereich den Kindersitz 10 seitlich begrenzende Kopfbereiche 20, 22 aus. Die Kopfbereiche 20, 22 erstrecken sich von der Rückenlehne 16 aus nach vorne in Sitzrichtung. Dabei umgeben die Kopfbereiche 20, 22 insbesondere einen Bereich, in dem der Kopf eines in dem Kindersitz 10 sitzenden Kinds angeordnet ist. Die Kopfbereiche 20, 22 bilden insbesondere einen Seitenaufprallschutz in dem Bereich des Kindersitzes 10, in dem der Kopf des in dem Kindersitz 10 sitzenden Kinds angeordnet ist. Dadurch kann der Kindersitz 10 besonders sicher ausgebildet werden.

Der Kindersitz 10 weist eine Zwischenschale 24 auf. Die Zwischenschale 24 ist innerhalb der Sitzgrundstruktur 18 angeordnet. Die Zwischenschale 24 ist auf einer Innenseite der Sitzgrundstruktur 18 angeordnet. Dabei ist die Zwischenschale 24 starr mit der Sitzgrundstruktur 18 verbunden. Die Zwischenschale 24 ist über mehrere, nicht näher dargestellte Verbindungselemente fest mit der Sitzgrundstruktur 18 verbunden. Die Zwischenschale 24 bildet den Sitzboden 14 des Kindersitzes 10 aus. Insbesondere im Bereich des Sitzbodens 14 bildet die Zwischenschale 24 seitliche Wandungen 26, 28 aus, die den Kindersitz 10 im Bereich des Sitzbodens 14 nach außen hin begrenzen. Dadurch ist in dem Bereich des Sitzbodens 14 über die Wandungen 26, 28 der Zwischenschale 24 ein Seitenaufprallschutz gegeben. An einem oberen Ende der Zwischenschale 24, das dem Sitzboden 14 abgewandt ist, bildet die Zwischenschale 24 eine Kopfstütze 30 aus. Die Kopfstütze 30 ist U-förmig ausgebildet und bildet zusätzlich zu den Kopfbereichen 20, 22 der Sitzgrundstruktur 18 einen Seitenaufprallschutz für den Kopf des in dem Kindersitz 10 sitzenden Kinds aus. Der Kindersitz 10 umfasst weiter ein nicht näher dargestelltes Polster. Das Polster bespannt den Sitzboden 14 und die Rückenlehne 16 in einem Sitzbereich des Kindersitzes 10. Das Polster ist dabei von einem Schaummaterial gebildet. Grundsätzlich ist es auch denkbar, dass das Polster aus einem anderen weichen Material gebildet ist.

Das Kindersitzsystem umfasst eine Kinderschale 34. Die Kinderschale 34 ist für ein liegendes Kleinkind vorgesehen. Die Kinderschale 34 ist zum Transport von Kleinkindern von der Geburt bis zum Alter von 12 Monaten und/oder mit einem Gewicht von bis zu 10 kg vorgesehen. Die Kinderschale 34 ist im Wesentlichen von einer Hartschale 36 gebildet. Die Hartschale 36 bildet eine Grundstruktur der Kinderschale 34 aus. Die Hartschale 36 ist dabei von einem Hartplastik gebildet. Grundsätzlich ist es auch denkbar, dass die Hartschale 36 aus einem anderen, dem Fachmann als sinnvoll erscheinenden Material gebildet ist, wie beispielsweise einem Faserverbundwerkstoff, wie beispielsweise einem CFK oder GFK. Dabei ist die Hartschale 36 aus mehreren, nicht näher bezeichneten Einzelelementen ausgebildet. Grundsätzlich ist es ebenfalls denkbar, dass die Hartschale 36 aus einem einzigen Bauteil gebildet ist. Auf einer Innenseite 38 bildet die Kinderschale 34 eine Sitz- bzw. Liegefläche 40 für das Kleinkind aus. Die Kinderschale 34 weist ein nicht näher dargestelltes Polster auf, das die Kinderschale 34 in der Sitz- bzw. Liegefläche 40 polstert. Die Kinderschale 34 weist einen Tragebügel 42 auf. Der Tragebügel 42 ist dazu vorgesehen, dass die Kinderschale 34 einfach von einer Person getragen werden kann. Der Tragebügel 42 ist schwenkbar an der Kinderschale 34 angebunden. Dabei ist der Tragebügel 42 mit der Hartschale 36 der Kinderschale 34 verbunden. Dabei erstreckt sich der Tragebügel 42 von einer ersten Seite der Hartschale 36 bis auf eine zweite Seite der Hartschale 36. Der Tragebügel 42 ist dabei im Wesentlichen U-förmig ausgebildet. Zur gelenkigen Anbindung des Tragebügels 42 weist die Hartschale 36 auf jeder Seite eine Schwenklagerung 44 auf, über die der Tragebügel 42 an die Hartschale 36 der Kinderschale 34 angebunden ist. Die Kinderschale 34 weist ein integriertes Gurtsystem 46 auf. Das integrierte Gurtsystem 46 ist zur Sicherung des in der Kinderschale 34 transportierten Kleinkinds vorgesehen. Das integrierte Gurtsystem 46 ist als ein 5-Punkt-Gurt ausgebildet. Grundsätzlich ist es auch denkbar, dass das Gurtsystem 46 als ein anderes, dem Fachmann als sinnvoll erscheinendes Gurtsystem ausgebildet ist. Das integrierte Gurtsystem 46 ist fest mit der Hartschale 36 der Kinderschale 34 verbunden. Das integrierte Gurtsystem 46 ist hierbei lediglich schematisch in die Figur 1 eingezeichnet. Eine Ausgestaltung des integrierten Gurtsystems 46 und dessen Befestigung an der Hartschale 36 der Kinderschale 34 entspricht der üblichen, dem Fachmann bekannten Art und Weise und soll deswegen hier nicht näher beschrieben werden.

Die Kinderschale 34 ist dazu vorgesehen, in dem Kindersitz 10 aufgenommen zu werden. Die Kinderschale 34 wird zu einer Befestigung in dem Kraftfahrzeug von dem Kindersitz 10 aufgenommen. Die Kinderschale 34 wird dabei fest und verliersicher mit dem Kindersitz 10 verbunden. Die Kinderschale 34 wird zur festen Verbindung mit dem Kindersitz 10 in einem Sitzbereich des Kindersitzes 10 angeordnet. Die Kinderschale 34 wird in den Bereich innerhalb der Zwischenschale 24 eingebracht. Dabei wird die Kinderschale 34 auf das nicht näher dargestellte Polster des Kindersitzes 10 gestellt. Grundsätzlich ist es auch denkbar, dass zur Anbringung der Kinderschale 34 in dem Kindersitz 10 zumindest ein Teil des Polsters oder das gesamte Polster entfernt wird. Eine Rückseite 48 der Kinderschale 34 ist dabei in einem Zustand, in dem die Kinderschale 34 mit dem Kindersitz 10 gekoppelt ist, dem Kindersitz 10 zugewandt. Zur Kopplung mit dem Kindersitz 10 weist die Kinderschale 34 ein erstes Formschlusselement 50 und ein zweites Formschlusselement 52 auf. Die beiden Formschlusselemente 50, 52 sind zur Kopplung mit dem Kindersitz 10 vorgesehen. Zur Anbindung der Kinderschale 34 über die Formschlusselemente 50, 52 der Kinderschale 34 weist der Kindersitz 10 zwei korrespondierend ausgebildete Formschlusselemente 54, 56 auf. Die Formschlusselemente 50, 52 der Kinderschale 34 sind dazu vorgesehen, mit den korrespondierend ausgebildeten Formschlusselementen 54, 56 des Kindersitzes 10 die Kinderschale 34 in Sitzrichtung zu sichern. Über die Formschlusselemente 50, 52 und deren Verbindung mit den korrespondierend ausgebildeten Formschlusselementen 54, 56 des Kindersitzes 10 ist die Kinderschale 34 axial in alle Richtungen in dem Kindersitz 10 gesichert.

Die Formschlusselemente 50, 52 der Kinderschale 34 sind auf der Rückseite 48 der Kinderschale 34 angeordnet. Die Formschlusselemente 50, 52 sind dazu vorgesehen, jeweils einen Bolzen 58, 60 der Formschlusselemente 54, 56 des Kindersitzes 10 zu umgreifen. In verbundenem Zustand umschließen die Formschlusselemente 50, 52 der Kinderschale 34 den jeweiligen Bolzen 58, 60 des entsprechenden Formschlusselements 54, 56 des Kindersitzes 10 vollständig. Dadurch ist die Kinderschale 34 in verbundenem Zustand fest und in alle Richtungen gesichert mit dem Kindersitz 10 verbunden. Die Formschlusselemente 50, 52 sind dabei beabstandet zu der Rückseite 48 der Kinderschale 34 angeordnet. Die Hartschale 36 bildet an der Rückseite 48 je Formschlusselement 50, 52 eine Erhebung 62, 64 aus, an deren der Rückseite 48 abgewandtem Ende die Formschlusselemente 50, 52 angeordnet sind. Die Formschlusselemente 50, 52 weisen nicht näher dargestellte Rastelemente auf, die bei einer Kopplung mit den Formschlusselementen 54, 56 des Kindersitzes 10 ausgelenkt werden und hinter dem Bolzen 58, 60 des jeweiligen Formschlusselements 54, 56 einschnappen, um eine formschlüssige Verbindung herzustellen. Die beiden Formschlusselemente 50, 52 sind im Wesentlichen auf einer gleichen Höhe der Kinderschale 34 angeordnet. Grundsätzlich ist es aber auch denkbar, dass die Formschlusselemente 50, 52 auf unterschiedlichen Höhen angeordnet sind. Dabei ist ein Formschlusselement 50 auf einer ersten, in Sitzrichtung gesehen, linken Seite der Kinderschale 34 angeordnet. Das zweite Formschlusselement 52 ist auf einer der ersten Seite gegenüberliegenden, in Sitzrichtung gesehen, rechten Seite der Kinderschale 34 angeordnet. Die Formschlusselemente 50, 52 sind als ISO-Fix-Konnektoren ausgebildet. Dabei sind die als ISO-Fix-Konnektoren ausgebildeten Formschlusselemente 50, 52 entsprechend dem Fachmann aus dem Stand der Technik bekannten ISO-Fix- Konnektoren ausgebildet und sollen deswegen hier nicht weiter beschrieben werden. Grundsätzlich ist es auch denkbar, dass die Formschlusselemente 50, 52 auf eine andere, dem Fachmann als sinnvoll erscheinende Weise ausgebildet sein können. Die Formschlusselemente 54, 56 des Kindersitzes 10 sind von der Sitzgrundstruktur 18 des Kindersitzes 10 ausgebildet. Die Formschlusselemente 54, 56 weisen jeweils Halteelemente 66, 68 auf, die den jeweiligen Bolzen 58, 60 des Formschlusselements 54, 56 fest mit der Sitzgrundstruktur 18 koppeln. Die Halteelemente 66, 68 sind dabei einstückig mit der Sitzgrundstruktur 18 ausgebildet. Grundsätzlich ist es auch denkbar, dass die Bolzen 58, 60 ebenfalls einstückig mit der Sitzgrundstruktur 18 ausgebildet sind. Grundsätzlich ist es ebenfalls denkbar, dass die Kinderschale 34 und dementsprechend auch der Kindersitz 10 weitere Formschlusselemente aufweisen, über die die Kinderschale 34 auf ihrer Rückseite 48 mit dem Kindersitz 10 gekoppelt ist.

Die Kinderschale 34 umfasst ein weiteres Formschlusselement 70. Das weitere Formschlusselement 70 ist zur weiteren Kopplung mit dem Kindersitz 10 vorgesehen. Dabei ist das weitere Formschlusselement 70 dazu vorgesehen, eine Rotation der Kinderschale 34 in dem Kindersitz 10 um eine Achse quer zur Sitzrichtung zu verhindern. Das weitere Formschlusselement 70 ist an einer Unterseite 72 der Kinderschale 34 angeordnet. Die Unterseite 72 ist in einem Zustand, in dem die Kinderschale 34 in dem Kindersitz 10 angeordnet ist, dem Sitzboden 14 des Kindersitzes 10 zugewandt. Das Formschlusselement 70 ist dabei an einem vorderen Ende der Kinderschale 34 angeordnet. Das weitere Formschlusselement 70 ist als ein L-förmiger Haken ausgebildet. Der Kindersitz 10 weist an einem vorderen Ende seines Sitzbodens 14 ein weiteres Formschlusselement 74 auf, das korrespondierend zu dem weiteren Formschlusselement 70 der Kinderschale 34 ausgebildet ist. Das weitere Formschlusselement 74 des Kindersitzes 10 ist als eine Ausnehmung ausgebildet, in der das weitere Formschlusselement 70 der Kinderschale 34 zur formschlüssigen Verbindung eingreift. In einem in dem Kindersitz 10 angebrachten Zustand der Kinderschale 34 sichert das weitere Formschlusselement 70 durch formschlüssigen Eingriff in das weitere Formschlusselement 74 des Kindersitzes 10 das vordere Ende der Kinderschale 34 an dem vorderen Ende des Kindersitzes 10 und kann so ein Abheben des vorderen Endes der Kinderschale 34 von dem Kindersitz 10 verhindern.

### Bezugszeichen

- 10: Kindersitz
- 12: Sitzbasis
- 14: Sitzboden
- 16: Rückenlehne
- 18: Sitzgrundstruktur
- 20: Kopfbereich
- 22: Kopfbereich
- 24: Zwischenschale
- 26: Wandung
- 28: Wandung
- 30: Kopfstütze
- 32: Standfuß
- 34: Kinderschale
- 36: Hartschale
- 38: Innenseite
- 40: Sitz- bzw. Liegefläche
- 42: Tragebügel
- 44: Schwenklagerung
- 46: Gurtsystem
- 48: Rückseite
- 50: Formschlusselement
- 52: Formschlusselement
- 54: Formschlusselement
- 56: Formschlusselement
- 58: Bolzen
- 60: Bolzen
- 62: Erhebung
- 64: Erhebung
- 66: Halteelement
- 68: Halteelement
- 70: Formschlusselement
- 72: Unterseite
- 74: Formschlusselement

## Patentansprüche

1. Kindersitzsystem mit zumindest einem Kindersitz (10), der für ein zumindest im Wesentlichen aufrecht sitzendes Kind vorgesehen ist, und mit einer Kinderschale (34), die für ein liegendes Kleinkind vorgesehen ist, wobei die Kinderschale (34) dazu vorgesehen ist, in dem Kindersitz (10) aufgenommen zu werden, wobei die Kinderschale (34) zumindest im Wesentlichen von einer Hartschale (36) gebildet ist und wenigstens ein Formschlusselement (50, 52) aufweist, das dazu vorgesehen ist, die Kinderschale (34) mit einem korrespondierenden Formschlusselement (54, 56) des Kindersitzes (10) zumindest in Sitzrichtung zu sichern, **dadurch gekennzeichnet, dass** die Kinderschale (34) wenigstens ein weiteres Formschlusselement (70) aufweist, das an einer Unterseite (72) der Kinderschale (34) angeordnet ist.

2. Kindersitzsystem nach Anspruch 1, **dadurch gekennzeichnet, dass** die Kinderschale (34) ein integriertes Gurtsystem (46) aufweist, das für eine Fahrtsicherung des Kleinkinds vorgesehen ist.

3. Kindersitzsystem nach einem der vorhergehenden Ansprüche, **dadurch gekennzeichnet, dass** das wenigstens eine Formschlusselement (50, 52) auf einer Rückseite (48) der Kinderschale (34) angeordnet ist.

4. Kindersitzsystem zumindest nach einem der vorhergehenden Ansprüche, **dadurch gekennzeichnet, dass** das wenigstens eine Formschlusselement (50, 52) dazu vorgesehen ist, zur starren Anbindung der Kinderschale (34) an den Kindersitz (10) wenigstens einen Bolzen (58, 60) des anderen Formschlusselements (54, 56) zumindest teilweise zu umgreifen.

5. Kindersitzsystem zumindest nach einem der vorhergehenden Ansprüche, **dadurch gekennzeichnet, dass** das wenigstens eine Formschlusselement (50, 52) als ein ISO-Fix-Konnektor ausgebildet ist.

6. Kindersitzsystem zumindest nach einem der vorhergehenden Ansprüche, **dadurch gekennzeichnet, dass** die Kinderschale (34) zumindest zwei Formschlusselemente (50, 52) zur Anbindung der Kinderschale (34) an den Kindersitz (10) aufweist.

7. Kindersitzsystem nach einem der vorhergehenden Ansprüche, **dadurch gekennzeichnet, dass** das wenigstens eine weitere Formschlusselement (70) an einem vorderen Ende der Kinderschale (34) angeordnet ist.

8. Kindersitzsystem zumindest nach einem der vorhergehenden Ansprüche, **dadurch gekennzeichnet, dass** das wenigstens eine weitere Formschlusselement (70) als ein im Wesentlichen L-förmiger Haken ausgebildet ist.

9. Kindersitzsystem zumindest nach einem der vorhergehenden Ansprüche, **dadurch gekennzeichnet, dass** der Kindersitz (10) wenigstens ein zu dem wenigstens einen weiteren Formschlusselement (70) der Kinderschale (34) korrespondierend ausgebildetes weiteres Formschlusselement (74) aufweist.

10. Kindersitzsystem nach Anspruch 9, **dadurch gekennzeichnet, dass** das wenigstens eine weitere Formschlusselement (74) des Kindersitzes (10) als eine Ausnehmung ausgebildet ist.

11. Kindersitzsystem nach einem der vorhergehenden Ansprüche, **dadurch gekennzeichnet, dass** der Kindersitz (10) wenigstens eine Sitzgrundstruktur (18) und wenigstens eine innerhalb der Sitzgrundstruktur (18) angeordnete Zwischenschale (24) aufweist.

## Claims

1. Child seat system with at least one child seat (10), which is provided for a child sitting at least substantially upright, and with a baby carrier (34), which is provided for an infant who is lying down, wherein the baby carrier (34) is intended to be received in the child seat (10), wherein the baby carrier (34) is formed at least substantially by a hard seat shell (36) and has at least one form-fitting element (50, 52), which is provided for securing the baby carrier (34) with a corresponding form-fitting element (54, 56) of the child seat (10) at least in the seat direction, **characterized in that** the baby carrier (34) has at least one further form-fitting element (70), which is arranged on an underside (72) of the baby carrier (34).

2. Child seat system according to claim 1, **characterized in that** said baby carrier (34) comprises an integrated harness system (46) provided for securing said infant in motion.

3. Child seat system according to one of the preceding claims, **characterized in that** at least one positive locking element (50, 52) is arranged on a rear side (48) of the baby carrier (34).

4. Child seat system at least according to one of the preceding claims, **characterized in that** at least one positive-locking element (50, 52) is provided for at least partially encompassing at least one bolt (58, 60) of the other positive-locking element (54, 56) for rigid connection of the child seat (10).

5. Child seat system at least according to one of the preceding claims, **characterized in that** at least one positive locking element (50, 52) is configured as an ISO-fix connector.

6. Child seat system at least according to one of the preceding claims, **characterized in that** the baby carrier (34) has at least two positive-locking elements (50, 52) for connecting the baby carrier (34) to the child seat (10).

7. Child seat system according to one of the preceding claims, **characterized in that** at least one further positive locking element (70) is arranged at a front end of said baby carrier (34).

8. Child seat system at least according to one of the preceding claims, **characterized in that** at least one further positive locking element (70) is configured as an essentially L-shaped hook.

9. Child seat system at least according to one of the preceding claims, **characterized in that** the child seat (10) has at least one further positive-locking element (74) designed to correspond to the at least one further positive-locking element (70) of the baby carrier (34).

10. Child seat system according to Claim 9, **characterized in that** at least one further positive-locking element (74) of the child seat (10) is designed as a recess.

11. Child seat system according to one of the preceding claims, **characterized in that** the child seat (10) has at least one seat base structure (18) and at least one intermediate shell (24) arranged inside the seat base structure (18).

## Revendications

1. Système de siège pour enfant avec au moins un siège pour enfant (10) prévu pour un enfant assis au moins sensiblement verticalement et avec un porte-bébé (34) prévue pour un enfant couché, le porte-bébé (34) étant prévue pour être reçue dans le siège pour enfant (10), le porte-bébé (34) étant formée au moins sensiblement par une coque de siège rigide (36) et présentant au moins un élément d'ajustement de forme (50, 52) qui est prévu pour fixer le porte-bébé (34) avec un élément d'ajustement de forme correspondant (54, 56) du siège pour enfant (10) au moins dans la direction du siège, **caractérisé en ce que** le porte-bébé (34) présente au moins un autre élément d'ajustement de forme (70) qui est disposé sur une face inférieure (72) du porte-bébé (34).

2. Système de siège pour enfant selon la revendication 1, **caractérisé en ce que** le porte-bébé (34) présente un système de ceinture intégré (46) qui est prévu pour immobiliser le tout-petit en mouvement.

3. Système de siège pour enfant selon l'une quelconque des revendications précédentes, **caractérisé en ce que** au moins un élément de verrouillage par complémentarité de forme (50, 52) est disposé sur un côté arrière (48) du porte-bébé (34).

4. Système de siège pour enfant selon au moins l'une des revendications précédentes, **caractérisé en ce que** au moins un élément d'encliquetage (50, 52) est prévu pour entourer au moins partiellement au moins un boulon (58, 60) de l'autre élément d'encliquetage (54, 56) pour la liaison rigide du porte-bébé (34) avec le siège pour enfant (10).

5. Système de siège pour enfant selon au moins l'une des revendications précédentes, **caractérisé en ce que** au moins un élément de verrouillage par complémentarité de forme (50, 52) est réalisé sous la forme d'un connecteur fixe ISO.

6. Système de siège pour enfant selon au moins l'une des revendications précédentes, **caractérisé en ce que** le porte-bébé (34) présente au moins deux éléments d'ajustement de forme (50, 52) pour relier le porte-bébé (34) au siège pour enfant (10).

7. Système de siège pour enfant selon l'une quelconque des revendications précédentes, **caractérisé en ce que** au moins un autre élément d'ajustement de forme (70) est disposé à une extrémité avant du porte-bébé (34).

8. Système de siège pour enfant selon au moins l'une des revendications précédentes, **caractérisé en ce que** au moins un autre élément d'ajustement de forme (70) est réalisé sous la forme d'un crochet essentiellement en forme de L.

9. Système de siège pour enfant selon au moins l'une quelconque des revendications précédentes, **caractérisé en ce que** le siège pour enfant (10) présente au moins un autre élément d'ajustement de forme (74) conçu pour correspondre à l'au moins un autre élément d'ajustement de forme (70) du porte-bébé (34).

10. Système de siège pour enfant selon la revendication 9, **caractérisé en ce que** au moins un autre élément d'encliquetage (74) du siège pour enfant (10) est réalisé sous la forme d'un évidement.

11. Système de siège pour enfant selon l'une quelconque des revendications précédentes, **caractérisé en ce que** le siège pour enfant (10) présente au moins une structure de base de siège (18) et au moins une coque intermédiaire (24) disposée à l'intérieur de la structure de base de siège (18).
